# EUROPÄISCHE PATENTSCHRIFT

(11) **EP 2 885 191 B1**
(45) Veröffentlichungstag und Bekanntmachung des Hinweises auf die Patenterteilung: **29.11.2017**
(21) Anmeldenummer: 13771474.7
(22) Anmeldetag: 01.10.2013
(51) Int. Cl.: H02J 4/00, B61C 17/00, B61L 15/00, B60L 1/02, B60L 1/14, B60L 1/00, H02J 13/00, H02J 3/14, B60L 9/00, B60L 3/00

(54) **VERFAHREN ZUR VERTEILUNG EINER LEISTUNG ÜBER EINE VIELZAHL VON VERBRAUCHEREINHEITEN EINES SCHIENENFAHRZEUGS**
METHOD FOR POWER DISTRIBUTION FOR PLURALITY OF LOADS IN A TRAIN
PROCÉDÉ DE DISTRIBUTION D'ÉNÉRGIE POUR UNE PLURALITÉ DE CHARGES DANS UN VÉHICULE FERROVIAIRE

(30) Priorität: 08.10.2012 DE 102012019636; 19.10.2012 DE 102012219077
(43) Veröffentlichungstag der Anmeldung: 24.06.2015
(73) Patentinhaber: Siemens Aktiengesellschaft, 80333 München (DE)
(72) Erfinder: DI BONAVENTURA, Stefan, 91186 Büchenbach (DE); STEINHAUER, Gerhard, 47877 Willich (DE)
(86) Internationale Anmeldenummer: PCT/EP2013/070421
(87) Internationale Veröffentlichungsnummer: WO 2014/056757

(56) Entgegenhaltungen:
- WO-A2-2011/081943
- US-A1- 2005 121 978
- US-A1- 2006 025 902
- US-A1- 2012 200 418

## Beschreibung

Die Erfindung betrifft ein Verfahren zur Verteilung einer elektrischen Leistung über eine Vielzahl von Verbrauchereinheiten eines Schienenfahrzeugs.

In bekannten Schienenfahrzeugen wird eine elektrische Leistung über eine entlang des Fahrzeugs verlegte Leistungsversorgungsleitung - in der fachmännischen Sprache auch "Zugsammelschiene" genannt - verteilt, an welche elektrische Verbraucher angeschlossen sind. Diese Leistungsversorgungsleitung wird durch mehrere Leistungsversorgungseinrichtungen mit elektrischer Leistung gespeist. Die Leistungsversorgungseinrichtungen beziehen die elektrische Energie von einer Energiequelle, die von einer Bahnnetzleitung oder einem Generator des Schienenfahrzeugs gebildet ist, und dienen herkömmlicherweise dazu, aus dieser verfügbaren Energie eine elektrische Leistung durch Erzeugung eines elektrischen Signals mit an den Leistungsbedarf angepassten Eigenschaften. Üblicherweise sind die Leistungsversorgungseinrichtungen von Umrichtern gebildet.

Bei einem Ausfall einer Leistungsversorgungseinrichtung kann die benötigte Verbraucherleistung die verfügbare Versorgungsleistung übersteigen. Hierbei ist eine Steuerung der Verbraucher notwendig, damit die Einspeisestellen, an welchen die Leistungsversorgungsleitung an die übrigen Leistungsversorgungseinrichtungen angeschlossen ist, nicht überlastet werden.

Für eine feste Konfiguration, d.h. eine feste Zusammenstellung eines Schienenfahrzeugs und eine feste Anzahl von Verbrauchern, sind bereits Ausfallszenarien vorgeschlagen worden, in welchen - entsprechend der momentan verfügbaren Leistung - bestimmte Verbraucher abgeschaltet werden, damit der Leistungsbedarf die Leistungsversorgungsleitung nicht überlastet.

Diese Steuerung hängt von der jeweiligen Konfiguration und von den möglichen Ausfallszenarien ab, wodurch ein entsprechender Anpassungsaufwand bei einer Konfigurationsänderung entsteht. Dieser Aufwand ist insbesondere mit folgenden Konfigurationsänderungen verbunden: Geänderte Anzahl von Wagen, Änderung des Wagentyps, geänderte Anzahl von Verbrauchern, Tausch von Verbrauchern durch Verbraucher mit anderen Leistungswerten, Änderung der Aufteilung der Leistungsversorgungsleitung usw. Dokumente WO2011081943, US2006025902 offenbaren Verfahren zur Verteilung einer elektrischen Leistung über eine Vielzahl von Verbrauchereinheiten eines Schienenfahrzeugs gemäss dem Stand der Technik. Der Erfindung liegt die Aufgabe zugrunde, ein Verfahren zur Verteilung einer elektrischen Leistung über eine Vielzahl von Verbrauchereinheiten eines Schienenfahrzeugs bereitzustellen, bei welchem der Anpassungsaufwand bei einer Konfigurationsänderung des Schienenfahrzeugs vermindert werden kann. Diese Aufgabe wird durch die Merkmale des Anspruchs 1 gelöst.

Es kann dadurch erreicht werden, dass dem Leistungsverteilungsprozess eine vorteilhafte Abbildung der gesamten Anordnung der Verbrauchereinheiten im Schienenfahrzeug zugrunde liegt. Bei einer Konfigurationsänderung des Schienenfahrzeugs kann sich der Anpassungsaufwand für den Leistungsverteilungsprozess vorteilhafterweise auf die Anpassung dieser Abbildung beschränken, wobei anderweitige Änderungen von Prozessschritten, die von dieser Abbildung ausgehen, weitestgehend vermieden werden können. Mit der bevorzugten Verwendung von zwei Attributen für diese Abbildung in der Form der Zuordnung einer Verbrauchereinheit zu einem Abschnitt des Schienenfahrzeugs und einer zugewiesenen Verteilungspriorität kann eine einfache Abbildung in Matrixform bereitgestellt werden. Eine Konfigurationsänderung des Schienenfahrzeugs insbesondere hinsichtlich der Anzahl von Abschnitten und der Anzahl von Verbrauchereinheiten unterschiedlicher Typen wird vorteilhafterweise durch eine Erweiterung oder Teilung der Matrix abgebildet, wobei der Konfigurationsänderung eine betrieblich bedingte Änderung oder eine störungsbedingte Änderung zugrunde liegen kann. Außerdem kann eine verbesserte Ausnutzung vorhandener Leistungsreserven erreicht werden.
Die Verbrauchereinheiten sind insbesondere an eine fahrzeugweit verlegte Leistungsversorgungsleitung, auch "Zugsammelschiene" genannt, angeschlossen, in welche die zumindest eine Leistungsversorgungseinheit Leistung einspeist. Die Leistungsübertragung von der Leistungsversorgungseinheit zu den Verbrauchereinheiten ggf. über die Abschnittsübergänge erfolgt demnach zweckmäßigerweise über die Zugsammelschiene. Unter einer "Verbrauchereinheit" soll insbesondere ein elektrischer Verbraucher oder ein Satz von elektrischen Verbrauchern verstanden werden, die hinsichtlich ihrer Funktion im Wesentlichen identisch zueinander ausgebildet sind.

Unter der "Erteilung" einer Leistung soll insbesondere verstanden werden, dass der jeweiligen Verbrauchereinheit eine Leistungskenngröße zugewiesen wird. Diese Leistungskenngröße kann eine Leistung oder eine Kenngröße sein, die eine Leistung vorgibt. Beispielsweise kann eine Leistungskenngröße unter der Form eines elektrischen Stroms zugewiesen werden. Die in einem Erteilungsvorgang erteilte Leistung kann dem Leistungsbedarf, welcher vorzugsweise von der Verbrauchereinheit gemeldet wird, entsprechen oder kleiner sein. Insbesondere kann die erteilte Leistung einer Nullleistung entsprechen, die einem Ausschaltbefehl für eine betriebene Verbrauchereinheit und einer Startsperre für eine sich noch nicht im Betrieb befindende Verbrauchereinheit entspricht.

Die erteilte Leistung hängt von der jeweiligen Verteilungspriorität und von einer zur Verfügung stehenden Leistung ab. Diese berücksichtigt insbesondere die gesamte Leistung, die von der zumindest einen Leistungsversorgungseinheit bereit gestellt werden kann, und die Summe der in vorherigen Erteilungsvorgängen erteilten Leistungen. Im Gegensatz zu herkömmlichen Verfahren zur Leistungsverteilung, in welchen eine Leistungsanpassung auf der Basis von vorbestimmten Anwendungsszenarien erfolgt, werden mit dem vorgeschlagenen Verfahren Verbrauchereinheiten insbesondere nur dann eingeschränkt, wenn der gesamte Leistungsbedarf der gleichzeitig betriebenen Verbrauchereinheiten die gesamte Leistungsversorgung übersteigt.

Der Prioritätsdurchlauf wird vorzugsweise mehrmals während eines Betriebs der Verbrauchereinheiten ausgeführt. Hierdurch kann eine regelmäßige Anpassung der Leistungsverteilung an einen veränderlichen Leistungsbedarf erfolgen. Wenn Verbrauchereinheiten nicht ständig einen Leistungsbedarf haben oder der Leistungsbedarf einer Verbrauchereinheit nicht konstant ist, kann mit einer mehrmaligen, insbesondere regelmäßigen Ausführung des Prioritätsdurchlaufs eine frei gewordene Leistung schnell und effizient neu verteilt werden.

In einer weiteren Ausführungsvariante der Erfindung wird vorgeschlagen, dass im Erteilungsvorgang die Ermittlung der zu erteilenden Leistung von einer Kenngröße für eine Übergangsleistung an zumindest einem Abschnittsübergang abhängt. Es kann hierdurch bei der Leistungsverteilung die Belastbarkeit der Zugsammelschiene vorteilhaft berücksichtigt werden. Hiermit kann eine Einsparung bei der Auslegung der Zugsammelschiene erreicht werden, da die maximale Belastung der Zugsammelschiene vorteilhaft mit der lokalen Erteilung an die Verbrauchereinheiten geregelt werden kann. Durch diese Regelung können außerdem die Fälle einer Trennung der Zugsammelschiene, z.B. durch Auslösen von Sicherungen, weitestgehend vermieden werden, wobei die Verfügbarkeit des Schienenfahrzeugs erhöht werden kann. Die Kenngröße kann auf der Basis der erteilten Leistungen ermittelt werden und/oder sie kann mittels Sensoren, wie z.B. Stromsensoren, erfasst werden.

Die Unterteilung des Schienenfahrzeugs in verschiedenen Abschnitten kann auf verschiedene Arten erfolgen, wobei die Abschnitte durch logische oder physikalische Trennungen begrenzt werden können. Weist das Schienenfahrzeug mehrere Wagen auf, kann ein Abschnitt von einem Wagenteil, einem Satz von mehreren Wagenteilen, mehreren Wagen usw. gebildet sein. Eine vorteilhafte Abbildung hinsichtlich der Zusammenstellung des Schienenfahrzeugs kann jedoch erreicht werden, wenn die Abschnitte jeweils einem unterschiedlichen Wagen entsprechen.

Vorzugweise werden bei dem Prioritätsdurchlauf sukzessive Abschnittsdurchläufe mit absteigender Verteilungspriorität ausgeführt. Hierdurch kann der Leistungsbedarf von Verbrauchereinheiten höherer Verteilungsprioritäten einfach und systematisch berücksichtigt werden. Eine Nullleistung wird insbesondere dann Verbrauchereinheiten mit niedriger Verteilungspriorität vergeben, wenn aufgrund vorheriger Leistungserteilungen an Verbrauchereinheiten höherer Verteilungsprioritäten zu wenig oder keine Leistung zur Verfügung steht.

Bei einem Prioritätsdurchlauf werden zweckmäßigerweise unterschiedliche Paare von Werten der Prioritätskenngröße und der Abschnittskenngröße abgetastet und vorzugsweise für jedes dieser Paare ein Erteilungsvorgang ausgeführt.

Gemäß einem Verteilungsmodus werden bei dem Prioritätsdurchlauf die Erteilungsvorgänge der Abschnittsdurchläufe für die Werte der Abschnittskenngröße ausgeführt, die der Gruppe von Abschnitten zugeordnet sind. Hierdurch kann eine Leistungsverteilung für alle Abschnitte des Schienenfahrzeugs erfolgen. Dieser Modus eignet sich insbesondere für einen normalen Betrieb des Schienenfahrzeugs mit einer fehlerfreien Leistungsversorgung und einer unterbrechungsfreien Leistungsübertragung an den Abschnittsübergängen.

In diesem Verteilungsmodus werden bei dem Prioritätsdurchlauf die Abschnittsdurchläufe vorzugsweise für die Werte der Prioritätskenngröße ausgeführt, die der Gruppe von Verteilungsprioritäten zugeordnet sind, wodurch ein systematisches Abtasten aller Paare der Prioritätskenngröße und der Abschnittskenngröße und ein Erteilungsvorgang für alle Verbrauchereinheiten erfolgen.

Gemäß einem weiteren Verteilungsmodus ist das Schienenfahrzeug in zumindest zwei Untergruppen von gekoppelten Abschnitten unterteilt und ein Prioritätsdurchlauf wird für zumindest eine der Untergruppen ausgeführt. Hierdurch kann eine vorteilhafte Anpassung der Leistungsverteilung an eine fehlerbedingte und/oder betriebsbedingte Unterteilung des Schienenfahrzeugs erreicht werden.

Der Unterteilung des Schienenfahrzeugs kann eine physikalische oder eine logische Trennung zugrunde liegen. Gemäß einem ersten Anwendungsfall verhindert ein Trennmittel eine Leistungsübertragung zwischen den Untergruppen, wobei eine unterschiedliche Leistungsversorgungseinheit für jede der Untergruppen vorgesehen ist und ein Prioritätsdurchlauf für jede Untergruppe ausgeführt wird. Hierdurch kann das Schienenfahrzeug hinsichtlich der Leistungsversorgung in zwei autarken Versorgungsbereichen getrennt werden, die jeweils zumindest von einer unterschiedlichen Leistungsversorgungseinheit versorgt werden. Das Trennmittel kann insbesondere als ein Schaltelement ausgeführt sein, welches an einem Abschnittsübergang angeordnet ist.

In einem weiteren Anwendungsfall kann der Unterteilung des Schienenfahrzeugs eine fehlerhafte Leistungsversorgung zugrunde liegen. In diesem Anwendungsfall wird vorgeschlagen, dass Kenngrößen für die Übergangsleistung über Abschnittsübergänge erfasst werden, eine Bedingung für eine kritische Übergangsleistung vorgegeben ist und bei Eintritt der Bedingung an einem Abschnittsübergang folgende Schritte ausgeführt werden:
- logische Unterteilung des Schienenfahrzeugs in zwei Untergruppen von Abschnitten beidseitig des Abschnittsübergangs,
- Erfassung einer Kenngröße, die von der den Untergruppen jeweils zugewiesenen Leistung abhängt,
- in der Untergruppe, welcher die größte Leistung zugewiesen ist, Ausführung eines Prioritätsdurchlaufs, bei welchem sukzessive Abschnittsdurchläufe mit aufsteigender Verteilungspriorität ausgeführt werden und den entsprechenden Verbrauchereinheiten Leistung entzogen wird.

Hierbei erfolgt ein Prioritätsdurchlauf vorteilhafterweise für die Werte der Abschnittskenngröße, die den Abschnitten der Untergruppe von Abschnitten entsprechen, in welcher die größte Leistung bezogen wird. Es kann in dieser Untergruppe ein Durchlauf der Verbrauchereinheiten beginnend mit den niedrigsten Verteilungsprioritäten erfolgen, bei dem den Verbrauchereinheiten insbesondere eine Nullleistung erteilt wird. Nach jedem Erteilungsvorgang bzw. Leistungsentzug wird vorzugsweise zumindest die Kenngröße für die Übergangsleistung am Abschnittsübergang, an welchem die Bedingung eingetreten ist, erfasst, wobei der Prioritätsdurchlauf zweckmäßigerweise gestoppt wird, wenn die Übergangsleistung unterhalb des kritischen Werts reduziert wird. Das vorgeschlagene Verfahren eignet sich insbesondere für ein Schienenfahrzeug, in welchem die Gruppe von Abschnitten durch mehrere Leistungsversorgungseinheiten versorgt wird. Bei dem Ausfall einer Leistungsversorgungseinheit bzw. einer Verminderung der von dieser bereitgestellten Leistung können erhöhte Leistungsübertragungen an Abschnittsübergängen eintreten. Durch das vorgeschlagene Verfahren kann eine dauerhafte, lokale Überlastung der Zugsammelschiene an einem Abschnittsübergang vorteilhaft vermieden werden.

Die Erfindung betrifft ferner ein Schienenfahrzeug mit einer Gruppe von Abschnitten, mit zumindest einer Leistungsversorgungseinheit, die zur Versorgung der Gruppe vorgesehen ist, wobei die Abschnitte paarweise durch einen Abschnittsübergang miteinander verbunden sind, über welchen eine Leistungsübertragung herstellbar ist, mit Verbrauchereinheiten, die jeweils einem der Abschnitte zugeordnet sind, und mit einer Steuereinheit, welche mit der Leistungsversorgungseinheit und den Verbrauchereinheiten verbunden ist und zur Ausführung des Verfahrens gemäß einer der oben beschriebenen Ausführungen vorgesehen ist. Bezüglich der vorteilhaften Wirkungen dieser Merkmalkombination wird - um unnötige Wiederholungen zu vermeiden - auf die obigen Ausführungen bezüglich des Verfahrens verwiesen.

Es werden Ausführungsbeispiele der Erfindung anhand der Zeichnungen erläutert. Es zeigen:
- Figur 1:: ein Schienenfahrzeug mit Verbrauchereinheiten, die mittels einer Zugsammelschiene versorgt werden,
- Figur 2:: eine zur Leistungsverteilung vorgesehene Abbildung der Verbrauchereinheiten in Matrixform gemäß einer Zugehörigkeit zu einem Abschnitt des Schienenfahrzeugs und einer Verteilungspriorität,
- Figur 3:: das Schienenfahrzeug aus Figur 1 bei einem Ausfall einer Leistungsversorgungseinheit,
- Figur 4:: die Abbildung aus Figur 2 im Anwendungsfall der Figur 3 und
- Figur 5:: die Abbildung aus Figur 2 bei getrennter Zugsammelschiene.

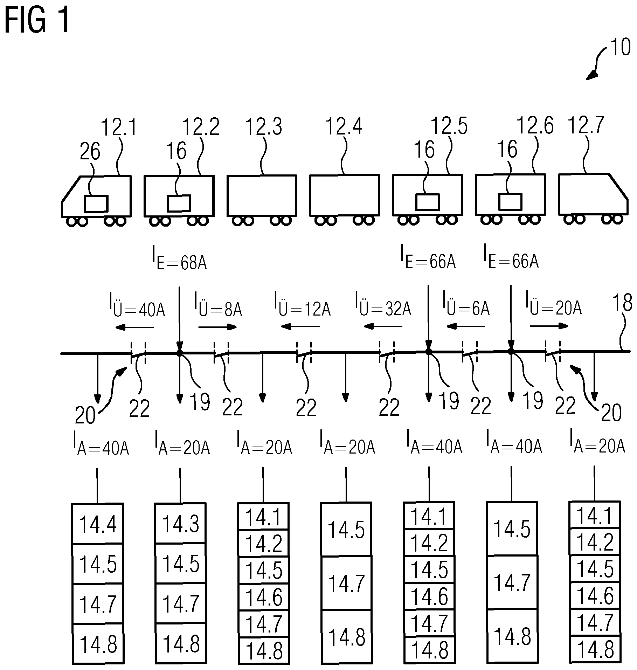

Figur 1 zeigt ein Schienenfahrzeug 10 in einer schematischen Seitenansicht. Dieses weist eine Vielzahl von miteinander gekoppelten Wagen auf. Das Schienenfahrzeug 10 ist im betrachteten Ausführungsbeispiel als Triebzug für den Transport von Passagieren ausgebildet, bei welchem Antriebselemente in zumindest einem der Wagen angeordnet sind. Alternativ kann das Schienenfahrzeug 10 als ein lokbespannter Zug ausgebildet sein.

Jeder Wagen wird als Abschnitt 12.1 bis 12.7 des Schienenfahrzeugs 10 bezeichnet, wobei ein Abschnitt 12 von einem Wagen gebildet ist. Es sind weitere Unterteilungen des Schienenfahrzeugs 10 in einer Gruppe von Abschnitten 12 denkbar, bei welchen ein Abschnitt von mehreren Wagen, von einer Wagenhälfte oder einem Paar von Wagenhälften unterschiedlicher Wagen gebildet ist.

Das Schienenfahrzeug 10 weist eine elektrische Ausrüstung mit einer Vielzahl von elektrischen Verbrauchereinheiten 14.1 bis 14.8 auf, die im Schienenfahrzeug 10 verteilt sind. Die Verbrauchereinheiten 14 sind der Übersichtlichkeit halber im unteren Teil der Figur 1 unter dem jeweiligen Abschnitt 12, in welchem sie angeordnet sind, dargestellt. Die Verbrauchereinheiten 14.1, 14.2 usw. unterscheiden sich insbesondere durch ihre Funktion bzw. durch ihren Typ voneinander. Zur Versorgung der Verbrauchereinheiten 14 mit elektrischer Leistung ist das Schienenfahrzeug 10 mit Leistungsversorgungseinheiten 16 versehen, die ebenfalls im Schienenfahrzeug 10 verteilt sind. Die Leistungsversorgungseinheiten 16 sind in der betrachteten Ausführung jeweils in einem unterschiedlichen Abschnitt 12 bzw. Wagen angeordnet. Bei der oben genannten Ausführungsvariante des Schienenfahrzeugs 10 als lokbespannter Zug kann die zumindest eine für die Versorgung des Schienenfahrzeugs 10 notwendige Leistungsversorgungseinheit 16 in der Lokomotive angeordnet sein.

In der betrachteten Ausführung sind die Verbrauchereinheiten 14 sogenannte Hilfsbetriebe des Schienenfahrzeugs 10, die insbesondere in der folgenden Gruppe von elektrischen Verbrauchern gewählt sind: Luftkompressor (14.3), Batterieladegerät (14.4), Klimaanlage in einem Heiz-, Lüftungs- oder Kühlmodus (14.7, 14.5 bzw. 14.8), Transformator- und/oder Stromrichterlüfter mit niedriger oder hoher Stufe (14.2 bzw. 14.6) oder Transformator- und/oder Stromrichterlüfterpumpe (14.1) .

Die Leistungsversorgungseinheiten 16 sind insbesondere als Hilfsbetriebeumrichter ausgebildet, die einen Drehstrom erzeugen, welcher über eine Zugsammelschiene 18 über das gesamte Schienenfahrzeug 10 verteilt wird, wie im mittleren Teil der Figur 1 schematisch dargestellt. Es wird mit der Zugsammelschiene 18 eine fahrzeugweite Leistungsversorgungsleitung bereitgestellt, indem die Abschnitte 12 paarweise durch einen Abschnittsübergang 20 miteinander verbunden sind, über welchen eine Leistungsübertragung zwischen zwei benachbarten Abschnitten 12 herstellbar ist. Die Leistungsübertragung zwischen zwei gekoppelten Abschnitten 12 kann durch ein Trennmittel 22, z.B. in der Form einer Schütze, unterbrochen werden. Die Leistungsversorgungseinheiten 16 sind an unterschiedlichen Leistungseinspeisungspunkten 19, die im Schienenfahrzeug 10 bzw. entlang der Zugsammelschiene 18 verteilt angeordnet sind, zur Einspeisung einer elektrischen Leistung in die Zugsammelschiene 18 an diese angeschlossen. Eine Kenngröße für die in die Zugsammelschiene 18, von der Leistungsversorgungseinheiten 16 eingespeiste Leistung stellt ein Einspeisestrom I_{E} an den Einspeisepunkten 19 dar. Außerdem ist eine weitere Kenngröße I_{Ü} für eine Übergangsleistung, die zwischen den Abschnitten 12 an den Abschnittsübergängen 20 übertragen wird, dargestellt. Die Kenngröße I_{Ü} entspricht einem Übergangsstrom. Des Weiteren ist eine Kenngröße I_{A} für die von den Verbrauchereinheiten 14 eines bestimmten Abschnitts 12 bezogene Leistung gezeigt. Diese Kenngröße I_{A} entspricht ebenfalls einem elektrischen Strom.

Jede Verbrauchereinheit 14 kann durch verschiedene Attribute gekennzeichnet werden. Ein erstes Attribut für eine Verbrauchereinheit 14 ist von der Zuordnung, insbesondere der Zugehörigkeit dieser Verbrauchereinheit 14 zu einem Abschnitt 12 gebildet. Für verschiedene Arten von Verbrauchern wird ein zweites Attribut definiert, welches von der Priorität abhängt, mit welcher den Verbrauchern der jeweiligen Art Leistung zuzuweisen ist, und einer Verteilungspriorität entspricht. Es ist eine Gruppe von Verteilungsprioritäten gemäß den verschiedenen Verbrauchertypen definiert, wobei den Verbrauchereinheiten 14 jeweils eine Verteilungspriorität zugewiesen ist.

Jeder Verbrauchereinheit 14 kann demnach in Bezug auf diese Attribute ein Paar von Kenngrößen zugeordnet werden, wobei eine matrizielle Darstellung der Anordnung von Verbrauchereinheiten 14 möglich ist.

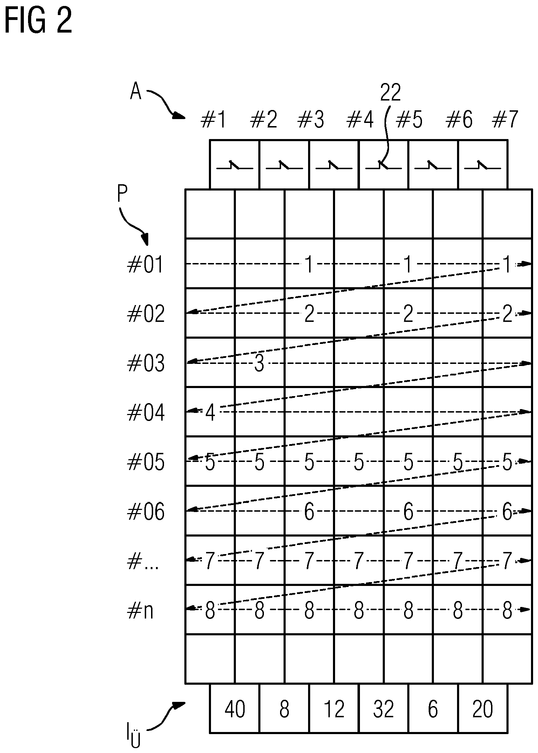

Diese matrizielle Darstellung ist in Figur 2 gezeigt. Wie in dieser Figur dargestellt sind die Verbrauchereinheiten 14 des Schienenfahrzeugs 10 - mittels einer Abschnittskenngröße A - als einem Abschnitt 12 zugeordnet und - mittels einer Prioritätskenngröße P - als einer bestimmten Verteilungspriorität zugewiesen gekennzeichnet. In dieser Matrix entspricht eine Zeile einem Wert der Prioritätskenngröße P und eine Spalte entspricht einem Wert der Abschnittskenngröße A. Ein Matrixelement entspricht demnach einer bestimmten Verbrauchereinheit 14 oder es ist ein leeres Element. Die Werte der Prioritätskenngröße P sind Zahlen, wobei die Verteilungspriorität mit zunehmenden Werten der Prioritätskenngröße P absteigt. Der Wert "1" entspricht demnach der größten Verteilungspriorität und - bei einer Gruppe von Verteilungsprioritäten mit n Prioritätsklassen - der Wert "n" entspricht der kleinsten Priorität. Die Werte der Abschnittskenngröße A sind Zahlen, die jeweils der Position des Abschnitts 12 im Schienenfahrzeug 10 entsprechen.

Oberhalb der Matrix ist schematisch der jeweilige Status der Trennmittel 22 an den Abschnittsübergängen 20 dargestellt. Im betrachten Beispiel sind alle Trennmittel 22 in einer leitenden Stellung, sodass die Zugsammelschiene 18 fahrzeugweit nicht unterbrochen ist.

Die Verteilung von elektrischer Leistung über den Satz von Verbrauchereinheiten 12 des Schienenfahrzeugs 10 wird im Folgenden beschrieben.

In einem ersten Schritt wird eine für die gesamte Gruppe von Abschnitten 12 verfügbare Leistung ermittelt. Beispielsweise kann diese Leistung der Summe der durch die Leistungsversorgungseinheiten 16 zur Verfügung stehenden Leistungen entsprechen.

Die Leistungsverteilung entspricht einer Folge von Erteilungsvorgängen, die jeweils auf eine unterschiedliche Verbrauchereinheit 14 bezogen sind. Dabei erfolgen Erteilungsvorgänge für unterschiedliche Paare der Abschnittskenngröße A und Prioritätskenngröße P bzw. für unterschiedliche Matrixelemente. In den Erteilungsvorgängen wird jeweils zumindest eine Leistung ermittelt, die der jeweiligen Verbrauchereinheit 14 zu erteilen ist, und zwar auf der Basis eines von der Verbrauchereinheit 14 gemeldeten Leistungsbedarfs, einer zur Verfügung stehenden Leistung und der zugewiesenen Verteilungspriorität. Die zur Verfügung stehende Leistung, die die Grundlage für einen Erteilungsvorgang ist, kann sich aus der gesamten Leistung ergeben, von welcher die Summe der in vorherigen Erteilungsvorgängen erteilten Leistungen abgezogen wird. Nach Abschluss eines Erteilungsvorgangs wird die für die weiteren Erteilungsvorgänge noch zur Verfügung stehende Leistung aktualisiert. Die im Erteilungsvorgang ermittelte, der jeweiligen Verbrauchereinheit 14 zu erteilende Leistung kann abhängig von den oben genannten Faktoren dem von der Verbrauchereinheit 14 gemeldeten Leistungsbedarf oder einer kleineren Leistung, wie insbesondere einer Nullleistung, entsprechen.

Für die Leistungserteilung der Verbrauchereinheiten 14 werden die Verbrauchereinheiten 14 beginnend mit der höchsten Verteilungspriorität behandelt. Es erfolgt ein Prioritätsdurchlauf der Matrix gemäß Figur 2, in welchem diese zeilenweise durchgelaufen wird. Dies wird mittels gestrichener Pfeile dargestellt. Es werden hierbei sukzessive Zeilendurchläufe gemäß absteigenden Verteilungsprioritäten bzw. steigenden Werten der Prioritätskenngröße P ausgeführt. Ein Zeilendurchlauf, in welchem - für einen gegebenen Wert der Prioritätskenngröße P - die Spalten der Matrix durchgelaufen werden, entspricht einem Abschnittsdurchlauf, in welchem - für diesen gegebenen Wert der Prioritätskenngröße P - ein Erteilungsvorgang sukzessiv für alle Werte der Abschnittskenngröße A, die den Abschnitten 12 der Gruppe von Abschnitten 12 entsprechen, ausgeführt wird. Besteht, für ein gegebenes Paar der Abschnittskenngröße A und der Prioritätskenngröße P keine Verbrauchereinheit 14 mit diesen Attributen entspricht der Erteilungsvorgang lediglich der Erteilung einer Nullleistung oder einer bloßen Inkrementierung der Abschnittskenngröße A und ggf. der Prioritätskenngröße P.

Der Prioritätsdurchlauf kann unterbrochen werden, wenn weitere Leistungserteilungen aufgrund der übrigen, zur Verfügung stehenden Leistung nicht möglich sind. In diesem Fall erfolgt der Prioritätsdurchlauf für eine Untergruppe von Verteilungsprioritäten.

Es ist jedoch vorteilhaft, dass der Prioritätsablauf fortgeführt wird, auch wenn die zur Verfügung stehende Leistung keiner weiteren Erteilung einer positiven Leistung bei Erteilungsvorgängen erlaubt. Dieser Fall kann z.B. eintreten, wenn eine oder mehrere Verbrauchereinheiten 14 mit hoher Verteilungspriorität einen hohen Leistungsbedarf melden, diesen Verbrauchereinheiten 14 eine entsprechende Leistung erteilt wird und die nach diesen Leistungserteilungen zur Verfügung stehende Leistung für die weitere Erteilung einer positiven Leistung für Verbrauchereinheiten 14 mit niedrigeren Verteilungsprioritäten nicht ausreicht. In diesem Fall wird diesen Verbrauchereinheiten 14 mit niedrigeren Verteilungsprioritäten eine "Nullleistung" erteilt, was - für bereits betriebene Verbrauchereinheiten 14 - einem Ausschaltbefehl oder - für sich im ausgeschalteten Zustand befindenden Verbrauchereinheiten 14 - einer Schaltsperre entspricht.

Melden mehrere Verbrauchereinheiten 14 einen hohen Anlaufsleistungsbedarf, kann in wiederholten Prioritätsdurchläufen abhängig vom jeweiligen Anlaufsleistungsbedarf und von einer verfügbaren Leistung jeweils nur einer Verbrauchereinheit 14 mit hoher Anlaufleistung eine Schaltfreigabe gegeben bzw. eine positive Leistung erteilt werden. Melden mehrere Verbrauchereinheiten 14 mit gleicher Verteilungspriorität einen Anlaufsleistungsbedarf, wird hierbei - pro Prioritätsdurchlauf - jeweils einer Verbrauchereinheit 14 mit hoher Anlaufleistung eine Schaltfreigabe erteilt.

Mit wiederholten Prioritätsabläufen kann bei Bedarf die gesamte zur Verfügung stehende Leistung vorteilhaft über die Verbrauchereinheiten 14 gemäß ihrer jeweiligen Verteilungspriorität neu verteilt werden.

Ein Erteilungsvorgang für eine Verbrauchereinheit 14 erfolgt wie oben beschrieben auf der Basis eines von der Verbrauchereinheit 14 gemeldeten Leistungsbedarfs, einer für die Erteilung zur Verfügung stehenden Leistung und der Verteilungspriorität. Zusätzlich kann die Ermittlung der zu erteilenden Leistung auf der Basis der Kenngröße I_{Ü} für eine Übergangsleistung an zumindest einem Abschnittsübergang 20 erfolgen (siehe auch Figur 1). Auf der Basis der für die Verbrauchereinheiten 14 erteilten Leistungen, der Anordnung der Einspeisungspunkte 19 der Leistungsversorgungseinheiten 16 und der von diesen zur Verfügung gestellten Leistung kann an den Abschnittsübergängen 20, an welchen das jeweilige Trennmittel 22 eine Leistungsübertragung zwischen benachbarten Abschnitten 12 zulässt, die Kenngröße I_{Ü} für diese Übergangsleistung ermittelt werden. In einem Erteilungsvorgang einer Verbrauchereinheit 14 stellt eine maximale, nicht zu überschreitende Übergangsleistung an den Abschnittsübergängen 20 eine weitere Randbedingung dar. Durch die Leistungserteilung an eine Verbrauchereinheit 14 darf kein Abschnittsübergang 20 überlastet werden. Die Kenngrößen I_{Ü} werden insbesondere nach Abschluss von jedem Erteilungsvorgang aktualisiert.

Im anhand der Figuren 1 und 2 betrachteten Beispiel befinden sich alle Trennmittel 22 in leitender Stellung, wodurch die Zugsammelschiene 18 fahrzeugweit nicht unterbrochen ist. Es erfolgt bei einem Prioritätsdurchlauf ein Erteilungsvorgang für die Werte der Abschnittskenngröße A, die der gesamten Gruppe von Abschnitten 12.1 bis 12.7 zugeordnet sind. Da ein Abschnittsdurchlauf für die Werte der Prioritätskenngröße P erfolgt, welche der gesamten Gruppe von Verteilungsprioritäten zugeordnet sind, wird im Prioritätsdurchlauf ein Erteilungsvorgang für jede Verbrauchereinheit 14 der gezeigten Matrix durchgeführt.

In diesem Beispiel wurde ferner davon ausgegangen, dass alle Leistungsversorgungseinheiten 16 einwandfrei funktionsfähig sind.

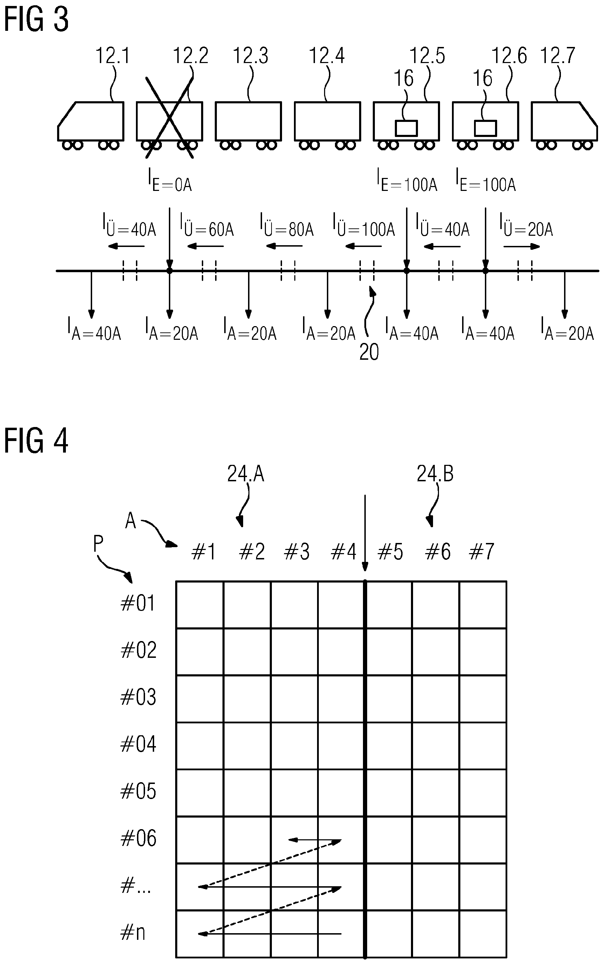

Figur 3 zeigt das Schienenfahrzeug 10 aus Figur 1 bei einem Ausfall einer der Leistungsversorgungseinheiten 16, insbesondere der im Abschnitt 12.2 angeordneten Leistungsversorgungseinheit 16. Durch den Ausfall entsteht eine Überschreitung der maximal zulässigen Übergangsleistung an zumindest einem der Abschnittsübergänge 20. Beispielsweise wird angenommen, dass ein erhöhter Strom mit dem Wert I_{Ü} = 100 A am Abschnittsübergang 20 zwischen den Abschnitten 12.4 und 12.5 entsteht.

Die Erfassung des Überschreitens der maximal zulässigen Übergangsleistung löst folgende Schritte aus. Es wird zunächst das Vorzeichen des Übergangsstroms bzw. der Kenngröße I_{Ü} an diesem Abschnittsübergang 20 erfasst. Dadurch kann ermittelt werden - bezogen auf die Längsrichtung des Schienenfahrzeugs 10 - auf welcher Seite des Abschnittsübergangs 20 der größte Leistungsbezug besteht bzw. eine Verringerung von Leistungen durchgeführt werden muss, damit die Kenngröße I_{Ü} auf einen zulässigen wert reduziert wird.

Das Schienenfahrzeug 10 wird hierbei virtuell in zwei Untergruppen 24.A und 24.B von Abschnitten 12.1 bis 12.4 einerseits und 12.5 bis 12.7 andererseits unterteilt, wobei die Untergruppen 24.A und 24.B beidseitig des Abschnittsübergangs 20 mit überschrittenem Übergangsstrom angeordnet sind. Dies ist in Figur 4 dargestellt, welche der matriziellen Darstellung aus Figur 2 entspricht.

Es erfolgt ein Leistungsentzug in der Untergruppe 24.A, in welcher gemäß dem erfassten Vorzeichen der Kenngröße I_{Ü} der größte Leistungsbezug besteht. Hierzu wird ein Prioritätsdurchlauf nur in der Untergruppe 24.A durchgeführt, wobei sukzessive Abschnittsabläufe mit aufsteigender Verteilungspriorität durchgeführt werden. Dies ist mittels Pfeilen schematisch dargestellt. In diesen Abschnittsabläufen werden nur die Werte der Abschnittskenngröße A abgetastet, die der Untergruppe 24.A von Abschnitten 12.1 bis 12.4 zugeordnet sind. Es erfolgt demnach kein Erteilungsvorgang für die Abschnitte 12.5 bis 12.7 der zweiten Untergruppe 24.B. Im Prioritätsdurchlauf wird mit der niedrigsten Verteilungspriorität bzw. der größten Prioritätskenngröße P begonnen. In den Erteilungsvorgängen wird grundsätzlich eine Nullleistung erteilt, was einem Ausschalten bzw. einer Startsperre der jeweiligen Verbrauchereinheiten 14 entspricht. Die Kenngrößen I_{Ü} werden nach jedem Erteilungsvorgang erneut berechnet oder mittels Sensoren neu erfasst. Der Prioritätsdurchlauf in der Untergruppe 24.A wird unterbrochen, wenn die maximal zulässige Übergangsleistung an den Abschnittsübergängen 20 unterschritten ist.

Im anhand der Figuren 3 und 4 erläuterten Beispiel erfolgte eine logische Unterteilung der gesamten Gruppe von Abschnitten 12.1 bis 12.7 in zwei Untergruppen 24.A und 24.B, die einer logischen Unterteilung entspricht und nach Herstellung von zulässigen Übergangsleistungen an den Abschnittsübergängen 20 behoben wird.

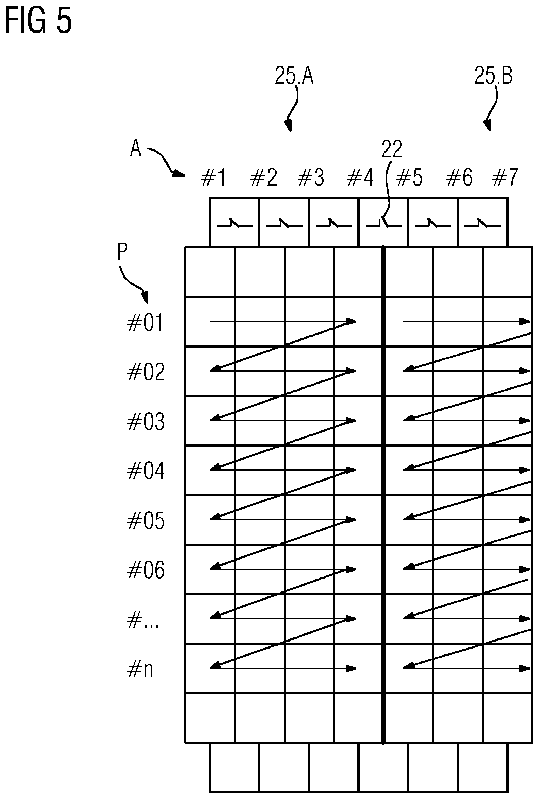

Figur 5 zeigt einen weiteren Anwendungsfall, in welchem eine Unterteilung der Gruppe von Abschnitten 12.1 bis 12.7 physikalisch erfolgt. Diese Unterteilung erfolgt durch ein Trennmittel 22, welches die Zugsammelschiene 18 an einer Stelle unterbricht, wodurch eine aufgeteilte Zugsammelschiene 18 entsteht. Beispielsweise wird die Zugsammelschiene 18 am Abschnittsübergang 20 zwischen den Abschnitten 12.4 und 12.5 unterbrochen, wodurch zwei voneinander getrennte Untergruppen 25.A und 25.B von Abschnitten 12.1 bis 12.4 bzw. 12.5 bis 12.7 gebildet werden. Die physikalische Trennung soll derart erfolgen, dass für jede Untergruppe 25.A und 25.B eine Leistungseinspeisung durch zumindest eine Leistungsversorgungseinheit 16 erfolgen kann.

Bezüglich der Leistungsverteilung wird in jeder Untergruppe 25.A, 25.B wie für die gesamte Gruppe von Abschnitten 12.1 bis 12.7 oben erläutert vorgegangen. Jede Untergruppe wird bezüglich der Leistungsversorgung wie eine autarke Einheit betrachtet, in welcher jeweils Prioritätsdurchläufe ausgeführt werden. Bei einem Prioritätsdurchlauf in einer Untergruppe erfolgen die Abschnittsdurchläufe nur für die Werte der Abschnittskenngröße A, die der jeweiligen Untergruppe zugeordnet sind.

Das Schienenfahrzeug 10 weist in zumindest einem der Abschnitte 12 bzw. einem der Wagen eine Steuereinheit 26 auf, die mit den Leistungsversorgungseinheiten 16 sowie den Verbrauchereinheiten 14 in Wirkverbindung steht und zur Ausführung der Verteilung der elektrischen Leistung gemäß dem oben beschriebenen Verfahren vorgesehen ist. Außerdem können an den Abschnittsübergänge Sensoreinheiten angeordnet sein, die zur Erfassung der Kenngröße I_{Ü} dienen. Wird diese Kenngröße bei den Erteilungsvorgängen berücksichtigt, steht die Steuereinheit 26 ebenfalls in Wirkverbindung mit den Sensoreinheiten.

## Patentansprüche

1. Verfahren zur Verteilung einer elektrischen Leistung über eine Vielzahl von Verbrauchereinheiten (14.1 - 14.8) eines Schienenfahrzeugs (10), bei welchem
- das Schienenfahrzeug (10) in eine Gruppe von Abschnitten (12.1 - 12.7) unterteilt ist, wobei zumindest eine Leistungsversorgungseinheit (16) für die Gruppe vorgesehen ist und die Abschnitte (12.1 - 12.7) paarweise durch einen Abschnittsübergang (20) miteinander verbunden sind, über welchen eine Leistungsübertragung herstellbar ist,
- eine Gruppe von Verteilungsprioritäten definiert ist und den Verbrauchereinheiten (14.1 - 14.8) jeweils eine Verteilungspriorität zugewiesen ist,
- die Verbrauchereinheiten (14.1 - 14.8) mittels einer Abschnittskenngröße (A) als einem Abschnitt (12.1 - 12.7) zugeordnet und mittels einer Prioritätskenngröße (P) einer Verteilungspriorität zugewiesen gekennzeichnet sind,
- in einem Erteilungsvorgang eine für eine Verbrauchereinheit (14.1 - 14.8) zu erteilende Leistung in Abhängigkeit eines Leistungsbedarfs, einer zur Verfügung stehenden Leistung und der zugewiesenen Verteilungspriorität ermittelt wird, **dadurch gekennzeichnet, dass**
- in einem Abschnittsdurchlauf Erteilungsvorgänge für die Werte der Abschnittskenngröße (A), die zumindest einer Untergruppe der Gruppe von Abschnitten zugeordnet sind, ausgeführt werden, und
- in einem Prioritätsdurchlauf für die Werte der Prioritätskenngröße (P), die zumindest einer Untergruppe der Gruppe von Verteilungsprioritäten zugeordnet sind, sukzessive ein Abschnittsdurchlauf ausgeführt wird.

2. Verfahren nach Anspruch 1,
**dadurch gekennzeichnet, dass**
der Prioritätsdurchlauf mehrmals während eines Betriebs der Verbrauchereinheiten (14.1 - 14.8) ausgeführt wird.

3. Verfahren nach Anspruch 1 oder 2,
**dadurch gekennzeichnet, dass**
im Erteilungsvorgang die Ermittlung der zu erteilenden Leistung von einer Kenngröße (I_{Ü}) für eine Übergangsleistung an zumindest einem Abschnittsübergang (20) abhängt.

4. Verfahren nach einem der vorhergehenden Ansprüche,
**dadurch gekennzeichnet, dass**
das Schienenfahrzeug (10) mehrere Wagen aufweist, wobei die Abschnitte (12.1 - 12.7) jeweils einem unterschiedlichen Wagen entsprechen.

5. Verfahren nach einem der vorhergehenden Ansprüche,
**dadurch gekennzeichnet, dass**
bei dem Prioritätsdurchlauf sukzessive Abschnittsdurchläufe mit absteigender Verteilungspriorität ausgeführt werden.

6. Verfahren nach einem der vorhergehenden Ansprüche,
**dadurch gekennzeichnet, dass**
bei dem Prioritätsdurchlauf die Erteilungsvorgänge der Abschnittsdurchläufe für die Werte der Abschnittskenngröße (A) ausgeführt werden, die der Gruppe von Abschnitten (12.1 - 12.7) zugeordnet sind.

7. Verfahren nach Anspruch 6,
**dadurch gekennzeichnet, dass**
bei dem Prioritätsdurchlauf die Abschnittsdurchläufe für die Werte der Prioritätskenngröße (P) ausgeführt werden, die der Gruppe von Verteilungsprioritäten zugeordnet sind.

8. Verfahren nach einem der Ansprüche 1 bis 5,
**dadurch gekennzeichnet, dass**
das Schienenfahrzeug (10) in zumindest zwei Untergruppen (24.A, 24.B; 25.A, 25.B) von gekoppelten Abschnitten (12) unterteilt ist und ein Prioritätsdurchlauf für zumindest eine der Untergruppen (24.A; 25.A, 25.B) ausgeführt wird.

9. Verfahren nach Anspruch 8,
**dadurch gekennzeichnet, dass**
ein Trennmittel (22) eine Leistungsübertragung zwischen den Untergruppen (25.A, 25.B) verhindert, eine unterschiedliche Leistungsversorgungseinheit (16) für jede der Untergruppen (25.A, 25.B) vorgesehen ist und ein Prioritätsdurchlauf für jede Untergruppe (25.A, 25.B) ausgeführt wird.

10. Verfahren nach Anspruch 8,
**dadurch gekennzeichnet, dass**
Kenngrößen (I_{Ü}) für die Übergangsleistung über Abschnittsübergänge (20) erfasst werden, eine Bedingung für eine kritische Übergangsleistung vorgegeben ist und bei Eintritt der Bedingung an einem Abschnittsübergang (20) folgende Schritte ausgeführt werden:
- logische Unterteilung des Schienenfahrzeugs (10) in zwei Untergruppen (24.A, 24.B) von Abschnitten (12) beidseitig des Abschnittsübergangs (20),
- Erfassung einer Kenngröße (I_{Ü}), die von der den Untergruppen (24.A, 24.B) jeweils zugewiesenen Leistung abhängt,
- in der Untergruppe (24.A), welcher die größte Leistung zugewiesen ist, Ausführung eines Prioritätsdurchlaufs, bei welchem sukzessive Abschnittsdurchläufe mit aufsteigender Verteilungspriorität ausgeführt werden und den entsprechenden Verbrauchereinheiten (14) Leistung entzogen wird.

11. Schienenfahrzeug mit einer Gruppe von Abschnitten (12.1 - 12.7), mit zumindest einer Leistungsversorgungseinheit (16), die zur Versorgung der Gruppe vorgesehen ist, wobei die Abschnitte (12.1 - 12.7) paarweise durch einen Abschnittsübergang (20) miteinander verbunden sind, über welchen eine Leistungsübertragung herstellbar ist, mit Verbrauchereinheiten (14.1 - 14.8), die jeweils einem der Abschnitte (12.1 - 12.7) zugeordnet sind, und mit einer Steuereinheit (26), welche mit der Leistungsversorgungseinheit (16) und den Verbrauchereinheiten (14.1 - 14.8) verbunden ist und **dadurch gekennzeichnet, dass** das Schienenfahrzeug zur Ausführung des Verfahrens nach einem der vorhergehenden Ansprüche vorgesehen ist.

## Claims

1. Method for distributing an electrical power among a plurality of consumer units (14.1-14.8) of a rail vehicle (10), in which
- the rail vehicle (10) is divided into a group of sections (12.1-12.7), wherein at least one power supply unit (16) is provided for the group, and the sections (12.1-12.7) are connected in pairs to one another by a section transition (20), via which a power transmission can be produced,
- a group of distribution priorities is defined, and in each case one distribution priority is allocated to the consumer units (14.1-14.8),
- the consumer units (14.1-14.8) are identified as being assigned to a section (12.1-12.7) by means of a section characteristic quantity (A) and as being assigned to a distribution priority by means of a priority characteristic quantity (P),
- in a granting process, a power to be granted for a consumer unit (14.1-14.8) is determined depending on a power demand, an available power and the allocated distribution priority, **characterized in that**
- in a section run, granting processes are implemented for the values of the section characteristic quantity (A) which are assigned at least to a subgroup of the group of sections, and
- in a priority run for the values of the priority characteristic quantity (P) which are assigned at least to a subgroup of the group of distribution priorities, a section run is successively implemented.

2. Method according to Claim 1,
**characterized in that**
the priority run is implemented a plurality of times during operation of the consumer units (14.1-14.8).

3. Method according to Claim 1 or 2,
**characterized in that**
in the granting process, the determination of the power to be granted is dependent on a characteristic quantity (I_{Ü}) for a transition power at at least one section transition (20).

4. Method according to one of the preceding claims,
**characterized in that**
the rail vehicle (10) has a plurality of railcars, wherein the sections (12.1-12.7) each correspond to a different railcar.

5. Method according to one of the preceding claims,
**characterized in that**
in the priority run, successive section runs are implemented with decreasing distribution priority.

6. Method according to one of the preceding claims,
**characterized in that**
in the priority run, the granting operations of the section runs are implemented for the values of the section characteristic quantity (A) which are assigned to the group of sections (12.1-12.7).

7. Method according to Claim 6,
**characterized in that**
in the priority run, the section runs are implemented for the values of the priority characteristic quantity (P) which are assigned to the group of distribution priorities.

8. Method according to one of Claims 1 to 5,
**characterized in that**
the rail vehicle (10) is divided into at least two subgroups (24.A, 24.B; 25.A, 25.B) of coupled sections (12), and a priority run is implemented for at least one of the subgroups (24.A; 25.A, 25.B).

9. Method according to Claim 8,
**characterized in that**
a disconnection means (22) prevents power transmission between the subgroups (25.A, 25.B), a different power supply unit (16) is provided for each of the subgroups (25.A, 25.B), and a priority run is implemented for each subgroup (25.A, 25.B).

10. Method according to Claim 8,
**characterized in that**
characteristic quantities (I_{Ü}) for the transition power across section transitions (20) are detected, a condition for a critical transition power is preset, and, in the event of the onset of the condition at a section transition (20), the following steps are implemented:
- logical division of the rail vehicle (10) into two subgroups (24.A, 24.B) of sections (12) on both sides of the section transition (20),
- detection of a characteristic quantity (I_{Ü}), which is dependent on the power allocated in each case to the subgroups (24.A, 24.B),
- in the subgroup (24.A) which is allocated the greatest power, implementation of a priority run in which successive section runs are implemented with increasing distribution priority and power is drawn from the corresponding consumer units (14).

11. Rail vehicle comprising a group of sections (12.1-12.7), comprising at least one power supply unit (16), which is intended for supplying power to the group, wherein the sections (12.1-12.7) are connected to one another in pairs by a section transition (20), via which a power transmission is producible, comprising consumer units (14.1-14.8), which are each assigned to one of the sections (12.1-12.7), and comprising a control unit (26), which is connected to the power supply unit (16) and the consumer units (14.1-14.8) and **characterized in that** the rail vehicle is intended for implementing the method according to one of the preceding claims.

## Revendications

1. Procédé de répartition d'une puissance électrique sur une pluralité d'unités (14.1 à 14.8) consommatrices d'un véhicule (10) ferroviaire, dans lequel
- le véhicule (10) ferroviaire est subdivisé en un groupe de tronçons (12.1 à 12.7), au moins une unité (16) d'alimentation en puissance étant prévue pour le groupe et des tronçons (12.1 à 12.7) étant reliés entre eux, paire par paire, par une transition (20) de tronçon, par laquelle un transport de puissance peut être réalisé,
- un groupe de priorités de répartition est défini et il est affectée respectivement une priorité de répartition aux unités (14.1 à 14.8) consommatrices,
- les unités (14.1 à 14.8) consommatrices sont caractérisées en étant associées, au moyen d'une grandeur (A) caractéristique de tronçon, en un tronçon (12.1 à 12.7) et en étant affectées, au moyen d'une grandeur (P) caractéristique de priorité, d'une priorité de répartition,
- dans une opération de distribution, une puissance à distribuer à une unité (14.1 à 14.8) consommatrice est déterminée en fonction d'un besoin de puissance, d'une puissance disponible et de la priorité de répartition affectée,
**caractérisé en ce que**
- dans un déroulement de tronçon, on effectue des opérations de distribution des valeurs de la grandeur (A) caractéristique de tronçon, qui sont associées à au moins un sous-groupe du groupe de tronçons et,
- dans un déroulement de priorité, on effectue successivement un déroulement de tronçon pour les valeurs de la grandeur (P) caractéristique de priorité, qui sont associées a au moins un sous-groupe du groupe de priorité de répartition.

2. Procédé suivant la revendication 1,
**caractérisé en ce que**
l'on effectue le déroulement de priorité plusieurs fois pendant un fonctionnement des unités (14.1 à 14.8) consommatrices.

3. Procédé suivant la revendication 1 ou 2,
**caractérisé en ce que**,
dans l'opération de distribution, la détermination de la puissance à distribuer dépend d'une grandeur (I_{Ü}) caractéristique d'une puissance à au moins une transition (20) de tronçon.

4. Procédé suivant l'une des revendications précédentes,
**caractérisé en ce que**
le véhicule (10) ferroviaire à plusieurs voitures, les tronçons (12.1 à 12.7) correspondant chacun à une voiture différente.

5. Procédé suivant l'une des revendications précédentes,
**caractérisé en ce que**,
dans le déroulement de priorité, on effectue des déroulements de tronçon successifs en ayant une priorité de répartition décroissante.

6. Procédé suivant l'une des revendications précédentes,
**caractérisé en ce que**,
dans le déroulement de priorité, on effectue les opérations de distribution des déroulements de tronçon pour les valeurs de la grandeur (A) caractéristique de tronçon, qui sont associées au groupe de tronçons (12.1 à 12.7).

7. Procédé suivant la revendication 6,
**caractérisé en ce que**,
dans le déroulement de priorité, on effectue les déroulements de tronçon pour les valeurs de la grandeur (P) caractéristique de priorité, qui sont associées au groupe de priorité de répartition.

8. Procédé suivant l'une des revendications 1 à 5,
**caractérisé en ce que**
le véhicule (10) ferroviaire est subdivisé en au moins deux sous-groupes (24.A, 24.B ; 25.A, 25.B) de tronçons (12) accouplés et on effectue un déroulement de priorité pour au moins l'un des sous-groupes (24.1 ; 25.A, 25.B).

9. Procédé suivant la revendication 8,
**caractérisé en ce qu'**
un moyen (22) de séparation empêche un transport de puissance entre les sous-groupes (25.A, 25.B), une unité (16) d'alimentation en puissance différente étant prévue pour chacun des sous-groupes (25.A, 25.B) et on effectue un déroulement de priorité pour chaque sous-groupe (25.A, 25.B).

10. Procédé suivant la revendication 8,
**caractérisé en ce que**
l'on détecte des grandeurs (I_{Ü}) caractéristiques de la puissance de transition sur des transitions (20) de tronçon, une condition d'une puissance de transition critique étant donnée à l'avance et, à l'apparition de la condition sur une transition (20) de tronçon, on effectue les stades suivants :
- subdivision logique du véhicule (10) ferroviaire en deux sous-groupes (24.A, 24.B) de tronçons (12) de part et d'autre de la transition (20) de tronçon,
- détection d'une grandeur (I_{Ü}) caractéristique, qui dépend de la puissance affectée respectivement aux sous-groupes (24.A, 24.B),
- dans le sous-groupe (24.A), à qui est affectée la puissance la plus grande, exécution d'un déroulement de priorité dans lequel on effectue des déroulements de tronçon successifs à une priorité de répartition croissante et on retire de la puissance des unités (14) consommatrices correspondantes.

11. Véhicule ferroviaire comprenant un groupe de tronçons (12.1 à 12.7), comprenant au moins une unité (16) d'alimentation en puissance prévue pour l'alimentation du groupe, les tronçons (12.1 à 12.7) étant reliés entre eux, paire par paire, par une transition (20) de tronçon, par laquelle un transport de puissance peut être réalisé, comprenant des unités (14.1 à 14.8) consommatrices, qui sont associées respectivement à l'un des tronçons (12.1 à 12.7), et comprenant une unité (26) de commande, qui est reliée à l'unité (16) d'alimentation en puissance et aux unités (14.1 à 14.8) consommatrices, et **caractérisé en ce que** le véhicule ferroviaire est prévu pour effectuer le procédé suivant l'une des revendications précédentes.
